Europäisches Patentamt

European Patent Office

Office européen des brevets

(19)

(11) Publication number: **0 021 422**
**B1**

(12) # EUROPEAN PATENT SPECIFICATION

(45) Date of publication of patent specification: **11.01.84**

(21) Application number: **80103599.9**

(22) Date of filing: **25.06.80**

(51) Int. Cl.³: **B 01 D 13/04,**
**B 01 D 53/22, C 08 F 2/52,**
**C 08 G 77/06**

(54) Gas separating member.

(30) Priority: **25.06.79 JP 79952/79**
**17.10.79 JP 134466/79**

(43) Date of publication of application:
**07.01.81 Bulletin 81/1**

(45) Publication of the grant of the patent:
**11.01.84 Bulletin 84/2**

(84) Designated Contracting States:
**DE FR GB IT**

(56) References cited:
**FR - A - 2 354 343**
**US - A - 3 657 113**
**US - A - 3 775 308**
**US - A - 4 032 440**

**CHEMICAL ABSTRACTS, vol. 92, no. 10, 10th
March 1980, page 385, no. 82364h Columbus,
Ohio, U.S.A. A.S. CHAWLA: "Use of plasma
polymerization for preparing siliconecoated
membranes for possible use in blood
oxygenators"**

(73) Proprietor: **KABUSHIKI KAISHA TOYOTA CHUO
KENKYUSHO**
**41-1, Aza Yokomichi Oaza Nagakute
Nagakute-cho Aichi-gun Aichi-ken (JP)**

(72) Inventor: **Yamamoto, Minoru**
**1-6, Naruko-cho Midori-ku
Nagoya-shi Aichi-ken (JP)**
Inventor: **Hirai, Masana**
**2-13, Hisakata Tempaku-ku
Nagoya-shi Aichi-ken (JP)**
Inventor: **Sakata, Jiro**
**84-25, Yagoto Miyukiyama Tempaku-cho
Tempaku-ku
Nagoya-shi Aichi-ken (JP)**

(74) Representative: **Blumbach Weser Bergen Kramer
Zwirner Hoffmann Patentanwälte
Radeckestrasse 43
D-8000 München 60 (DE)**

(56) References cited:
**APPLIED POLYMER SYMPOSIA, no. 22, 1973,
pages 241-253 John Wiley & Sons New York,
U.S.A. H. YASUDA: "Reverse osmosis
membranes formed by plasma polymerization of
organic compounds"**

JOURNAL OF APPLIED POLYMER SCIENCE, vol. 17, 1973, pages 201-222 John Wiley & Sons New York, U.S.A. H. YASUDA et al.: "Preparation of reverse osmosis membranes by plasma polymerization of organic compounds"

JOURNAL ELECTROCHEMICAL SOCIETY: Electrochemical Science and Technol. vol. 119, no. 4, April 1972, pages 451-455 Princeton, N.J. M.J. VASILE et al.: "Organosilicon films formed by an RF plasma polymerization process"

POLYMER SCIENCE U.S.S.R., vol. 9, no. 9, 1967, pages 2281-2289 Pergamon Press Oxford, G.B. B.V. TKACHUK et al.: "Polymerization of organosilicon compounds on a metal surface using a glow discharge"

CHEMICAL ABSTRACTS, vol. 78, no. 14, 9th April 1973, page 1, no. 84840v Columbus, Ohio, U.S.A. H.J. TILLER et al.: "Plasma polymerization at surfaces"

NATURE, vol. 209, pages 769-773 19th February 1966 Basingstoke, G.B. T. WILLIAMS et al.: "Polymerization in a glow discharge"

The file contains technical information submitted after the application was filed and not included in this specification

### Gas separating member

This invention relates to a gas separating member according to the precharacterizing clause of claim 1.

A gas separating member of this kind has been published by US—A—3 657 113. The known gas separating member comprises a porous supporting substrate on which one or more extremely thin layers of a cross-linked polymerizate are deposited having a total thickness between about 0.1 and 10 $\mu$m. Where there is a plurality of the cross-linked deposits, the two coatings generally may be expected to have the same effect upon the permeability and selectivity of the composite membrane as a single layer of the same polymerizate having a thickness equal to the sum of the thickness of the two coatings. In order to be able to deposit such thin layers as mentioned above on a porous substrate by plasma polymerization all pores of the substrate have to be well below 0.025 $\mu$m in diameter.

US—A—3 775 308 describes a semipermeable composite membrane which is formed by plasma polymerization of an organic monomer in the presence of the porous supporting substrate. The porous substrate may be in various forms, e.g., sheet, tubular membrane, or hollow fibers. The pore size will generally range from about 0.005 to 0.5 $\mu$m.

By the publication "Artificial Organs" 1979, Vol. 3, No. 1, pages 92 to 96, it has become known to deposit a polymer film which consists of organosilane resin by plasma polymerization on a microporous polypropylene membrane.

It is an object of the present invention to improve a gas separating member according to the precharacterizing clause of claim 1 by imparting to such a separating member besides a high gas separation factor a superior gas permeability.

Further objects of the present invention are to provide a gas separating member with a high mechanical strength and to provide a gas separating member which can be used to separate oxygen from nitrogen in air or to separate helium or hydrogen from other gases.

These objects are solved by the features of claim 1. Further features of the invention are described in the subclaims.

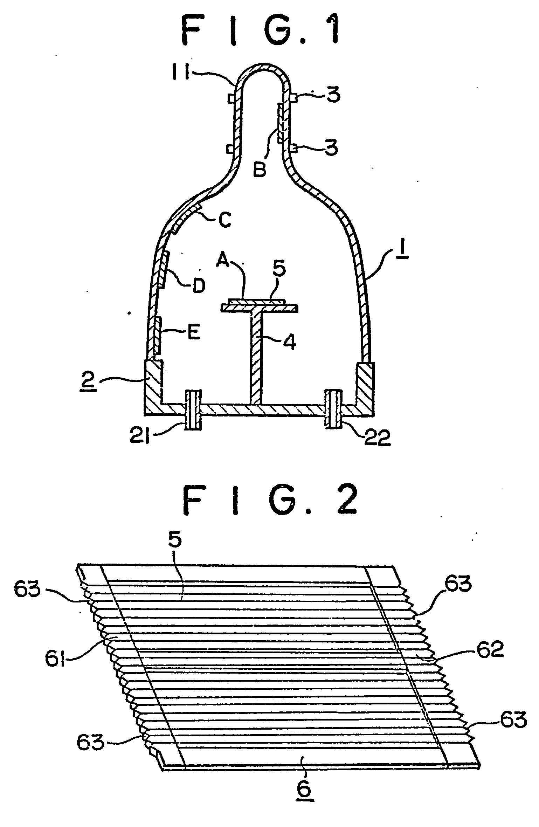

Figure 1 is a sectional view of the apparatus used for plasma polymerization in the Examples of this invention. Figure 2 is a perspective view of a supporting frame on which a substrate in the form of a hollow fiber is wound.

The gas separating member of this invention comprises a porous substrate in the form of a film, wall or hollow fiber, and two polymer films formed on a surface of the substrate by plasma polymerization.

The porous substrate herein serves to provide mechanical strength to a gas separating member, and comprises a porous film, wall or hollow fiber having pores of a diameter of several thousandths of a micrometer to several micrometers. More specifically, the substrate may be a sintered product obtained by sintering metal, ceramic or polymer particles, a fibrous product formed by knitting or weaving fibers, or stacking fibers in felt form, or a porous polymer film, or a porous hollow fiber which has a diameter of several tenths of a micrometer to several millimeters.

The substrate may have the form of a flat plate or a tube, or any other form. The substrate in the form of a fine tube or hollow fiber has the following advantages as compared with that in the form of a flat plate or film. The substrate in the form of a hollow fiber can be used under higher pressure because of its higher pressure resistance.

Moreover, the substrate in the form of a hollow fiber has an advantage over that in the form of a film in that a larger area for permeation can be obtained in a certain cubic volume. Therefore a gas separating device, if the gas separating member in the form of a hollow fiber is employed, is more compact in shape.

The substrates in the form of a hollow fiber which can be used for the gas separating member in accordance with this invention include a porous polypropylene hollow fiber having a multiplicity of pores of a diameter of about several hundredths of a micrometer, a porous glass hollow fiber and a porous cellulose acetate hollow fiber.

The method of this invention, which forms a polymer film by plasma polymerization, permits the relatively easy formation of a polymer film on a relatively complicated surface configuration, such as a tubular surface, or uneven surface.

In order to form a stable polymer film covering the surfaces of the pores present in the surface of the substrate, the diameter of the pores, if they are circular, does preferably not exceed several tenths of a micrometer. If the pores are rectangular or oval, or the like, their minor side or axis does preferably not exceed 0.1 micrometer in length. The substrates which can be used advantageously include a porous cellulose acetate or porous polycarbonate film having a multiplicity of pores having a diameter of several thousandths to several hundredths of a micrometer uniformly formed therein, and a porous polypropylene film in which rectangular pores having their minor side or axis of several hundredths of a micrometer are formed by stretching.

The plasma polymerization by which a polymer film is formed on the substrate surface means a method for polymerization which comprises introducing organic monomers into a space filled with a plasma, whereby the organic monomers are activated and converted into radicals or ions to effect polymerization. More specifically, an electric field is applied to a low pressure gas to energize it into a gas of high energy, whereby the gas of high energy is converted into a dissociated form enriched with electrons, ions and radicals, i.e., a plasma. The space occupied by the plasma is fed with organic monomers. The organic monomers are activated like radicals or ions, and the unreacted monomers are progressively polymerized, thereby forming a polymer film on a surface of the substrate placed in the space. The internal and external electrode methods are available for the application of an electric field. According to the internal electrode method, it is possible to apply a direct or alternating current, or high frequency electric field, while the external electrode method permits application of a high frequency electric field. The plasma polymerization for this invention can also be accomplished by a method generally known as reverse sputtering which is the same as the aforementioned internal electrode method.

The organic monomers which can be used for the formation of the first polymer film include organo-silanes such as hexamethyldisiloxane, diethoxydimethylsilane, octamethylcyclotetrasiloxane, tetraethoxysilane, triethoxyvinylsilane and tetramethylsilane.

In the gas separating member of this invention, the surfaces of the pores present in the surface of the substrate are covered with a polymer film formed by plasma polymerization. It is by the polymer film formed over the surfaces of the pores that gas separation can be effected. Therefore, it is important to know the nature of the polymer film formed over the surfaces of the pores, but impossible to do so by any presently available means for determining physical properties, since the pore diameter is as fine as 0.1 micrometer or less. It is, however, presumed from up-to-date knowledge on plasma polymerization that polymers begin to form around the pores of the substrate and grow towards the centers thereof until they close the central openings thereof and form a continuous film. It is, therefore, supposed that the polymer film formed over the surfaces of the pores has a greater thickness around the pores than in the center thereof, instead of having a uniform thickness over the whole surfaces of the pores. In consideration of the fact that various modes of reactions take place simultaneously in a plasma, it is assumed that the polymer film thereby obtained would have a chemical composition different from that of a polymer film formed by an ordinary method for polymerization. Differences in chemical composition therebetween can be inferred, for example, from the fact that while a known silane film composed of a dimethyl-polysiloxane structure has a low mechanical strength and a gas separation factor $(O_2/N_2)$ of only about 2.0, the gas separating member having a silane film obtained by plasma polymerization in accordance with this invention has a high mechanical strength and a gas separation factor $(O_2/N_2)$ of at least 2.3.

In the present invention, two polymer films are formed on the substrate by plasma polymerization. A gas separating member which comprises a porous substrate in the form of a film, wall or hollow fiber, the first polymer film of organosilane formed on a surface of the substrate by plasma polymerization and the second polymer film of hydrocarbon formed on the surface of the first polymer film by plasma polymerization, has special features. The gas separating member shows the following gas permeability for each gas. The permeabilities of hydrogen, helium, nitrogen and oxygen are, respectively, $0.9 \times 10^{-2}$, $0.75 \times 10^{-2}$, $2.9 \times 10^{-4}$ and $1.2 \times 10^{-3}$ cm³/sec.cm². bar.

The gas separating member can be used for the enrichment of hydrogen and helium. In order to understand more easily the features of the gas separating member, two examples are shown. Suppose that the gas separating member is placed between a mixed gas chamber at one bar pressure and a vacuum chamber. The surface are of the gas separating member is 1 m² and the time for separation is one minute. When the mixed gas consists of 50 volume % of hydrogen and 50 volume % of air, the total volume of gases which are permeated through the gas separating members, is 2.8 liters. The permeated gases consist of about 95 volume % of hydrogen, 2.5 volume % of nitrogen and 2.8 volume % of oxygen. In case the mixed gas consists of 50 volume % of helium and 50 volume % of air, the total volume of permeated gases is 2.5 liters and the gases consist of about 94 volume % of helium, 2.9 volume % of nitrogen and 3.3 volume % of oxygen.

With regard to the gas separating member, the first polymer film is composed of organosilane and the second polymer film is composed of hydrocarbon. The first polymer film is considered to be contributed to the high permeability of gases and the second polymer film is contributed to the high separation factors of $H_2$/air and He/air.

The polymer film which effects gas separation is rigidly united with the substrate surface by plasma polymerization, so that the rate of performance in gas separation of the gas separating member of this invention is high and the mechanical strength of aforementioned member is as high as that of the substrate. Thus, the gas separating member of this invention is, from an overall standpoint, of high practical value.

According to this invention, it is possible easily to form a strong polymer film on the substrate surface, irrespective of the shape of the substrate, since it is by plasma polymerization that the polymer film is formed on the substrate surface. Therefore, gas separating members composed of hollow fibers can also be easily made by the method of this invention.

The gas permeability and separation factor were determined by separating, detecting and

4

measuring constituents of permeated gas in a gas chromatograph in accordance with the ASTM method (pressure method).

More specifically, a gas separating member in the form of a film was placed in a permeation cell, and after evacuation of the spaces on both sides of the film by a vacuum pump compressed air at 10.8 $N/cm^2$ was introduced into the space on one side of the film. The gas which had permeated through the gas separating member in the form of the film within a predetermined time period was temporarily trapped and then introduced into a gas chromatograph. The gas was separated into its constituents, i.e., oxygen and nitrogen, in a molecular sieve type column, and the amount of each constituent was obtained from a working curve which had previously been prepared, whereby the separation factor $(O_2/N_2)$, rate of oxygen permeation, rate of nitrogen permeation and amount of permeated gases $(O_2+N_2)$ were calculated.

The gas separating member of this invention is considered to have a thickness of not more than several tenths of a micrometer. Polymer films were formed on glass plates, instead of the substrate, in accordance with the same conditions of plasma polymerization as those which were employed in the method of this invention, and the thickness of each of such polymer films was determined by inspecting an interference fringe through an interference microscope. The thickness of any film formed by plasma polymerization in the Examples which will hereinafter be described was within the range of 0.1 to 0.3 micrometers.

Although the foregoing description of the gas separating member according to this invention has been directed solely to the separation of air into oxygen and nitrogen, the gas separating member of this invention can also advantageously be used for the separation of hydrogen, helium, carbon monoxide, carbon dioxide, radioactive rare gas, etc.

The invention will now be described with reference to Examples.

Figure 1 shows a sectional view in outline of a plasma generator used in the present Examples. The plasma generator comprises a glass jar 1 of about 50 cm in height and about 30 cm in diameter of the bottom part thereof which has a top projection 11 having a diameter of about 7 cm; a metal base 2 forming the bottom of the jar 1; and a pair of electrodes 3 made of a copper strip which is wound around the top and bottom of the projection 11, respectively. The base 2 is provided with a passage 21 through which a monomer gas is introduced into the jar 1 and a passage 22 through which the interior of the jar 1 is evacuated. A sample table 4 made of a metal is provided in the jar 1.

A substrate 5 in the form of a film on which a polymer film was to be formed by plasma polymerization was placed on the sample table 4 in the jar 1 ('A' position), between the electrodes 3 on the top projection 11 ('B' position), on the shoulder of the jar 1 ('C' position), on the mid-portion of the jar 1 ('D' position), or on the lower portion of the jar 1 ('E' position). A pair of substrates 5 having the size of 7 cm by 10 cm each were placed side by side in the same position.

A substrate in the form of a hollow fiber 5 is wound on a supporting frame 6 made of polycarbonate, as shown in Figure 2 and the substrate with the supporting frame 6 is placed on the sample table 4. The supporting frame 6 has ditches 63 spaced in a certain distance therebetween on both of the oppositely facing sides 61, 62 of the supporting frame. The substrate in the form of a hollow fiber is embedded in each of the ditches 63 and wound in a certain space on the supporting frame 6. This use of the supporting frame 6 prevents the surface of the substrate in the form of the hollow fiber from contacting each other. If the surface of the substrate in the form of the hollow fiber comes into contact with each other, a polymer film will not be formed on the contacted surface of the substrate. At the present stage, the supporting frame 6 is used for the experimental production of the gas separating member. For mass production, a lot of bobbins arranged in a line at a certain space therebetween will be used instead of the supporting frame 6. A polymer film may be formed on the surface of the substrate while the substrate in the form of a hollow fiber is continuously wound by the bobbins.

Plasma polymerization was performed by first placing the substrate in at least one of the aforementioned 'A' to 'E' positions, and evacuating the jar 1 through the passage 22 by a vacuum pump (not shown). While the vacuum pump was kept operating to continue evacuation, a predetermined kind of organic monomers was introduced into the jar 1 through the passage 21, and the atmospheric pressure in the jar was maintained at about 0.13 to 0.4 mbar. A predetermined power input of high frequency voltage was applied across the electrodes 3 in order to cause plasma polymerization to take place, whereby a polymer film was formed on the surface of the substrate 5 after a predetermined time period. The plasma polymerization in all of the following Examples was performed by the aforementioned method. Therefore, the description of each Example will be limited to the kinds of the organic monomers and the substrates used, and the conditions of plasma polymerization involved.

The following table shows the substrates in the form of a film used in the Examples 1 to 14.

| Substrate | Material | Pore size (Å) | Total pore area (%) | thickness (micrometers) | Others |
|---|---|---|---|---|---|
| PP | Polypropylene | 200×2,000 | Approx. 3 | 25 | rectangular pores |
| PC—2 | ,, | 500 dia | 1.2 | 5 | circular pores |
| PC—3 | ,, | 300 dia | 0.4 | 5 | ,, |

Example 1

A PP substrate shown in the table was placed in the sample position 'A' (Figure 1), and hexamethyldisiloxane was used as organic monomer. They were reacted for 20 minutes at a monomer pressure of 0.27 mbar and a power input of 50 watts across the electrodes, so that the first polymer film was formed on the substrate. Subsequently, cyclohexene was used instead of hexamethyldisiloxane as organic monomer and the reaction was continued for 20 minutes at a monomer pressure of 0.27 mbar and a power input of 50 watts across the electrodes. Thus, the second polymer film was formed on the surface of the first polymer film to prepare a gas separating member according to this invention.

The gas permeability and separation factor of the gas separating member were measured by ASTM-method.

The performance of this gas separating member was as follows:

Rate of hydrogen permeation: $3.1 \times 10^{-3}$ cm$^3$/sec.·cm$^2$·bar
Rate of helium permeation: $2.8 \times 10^{-3}$ cm$^3$/sec.·cm$^2$·bar
Rate of oxygen permeation: $2.2 \times 10^{-4}$ cm$^3$/sec.·cm$^2$·bar
Rate of nitrogen permeation: $6.3 \times 10^{-5}$ cm$^3$/sec.·cm$^2$·bar
Rate of methane permeation: $7.3 \times 10^{-5}$ cm$^3$/sec.·cm$^2$·bar
Separation factor ($H_2/N_2$):49
Separation factor ($He/N_2$):44
Separation factor ($O_2/N_2$):3.5
Separation factor ($CH_4/N_2$):1.2

Example 2

A PC—2 substrate shown in the table was placed in the sample position 'C' and octamethylcyclotetrasiloxane was used as organic monomer. They were reacted for 30 minutes at a monomer pressure of 0.27 mbar and a power input of 50 watts across the electrodes, whereby the first polymer film was formed on the substrate. Next, cyclohexene was used instead of octamethylcyclotetrasiloxane as organic monomer and the reaction was continued for 5 minutes at a monomer pressure of 0.27 mbar and a power input of 50 watts across the electrodes, whereby the second polymer film was formed on the surface of the first polymer film to prepare a gas separating member according to this invention.

The performance of this gas separating member was as follows:

Rate of hydrogen permeation: $0.8 \times 10^{-2}$ cm$^3$/sec.·cm$^2$· bar
Rate of helium permeation: $7.1 \times 10^{-3}$ cm$^3$/sec.·cm$^2$·bar
Rate of oxygen permeation: $1.1 \times 10^{-3}$ cm$^3$/sec.·cm$^2$·bar
Rate of nitrogen permeation: $3.2 \times 10^{-4}$ cm$^3$/sec.·cm$^2$·bar
Rate of methane permeation: $4.2 \times 10^{-4}$ cm$^3$/sec.·cm$^2$·bar
Separation factor ($H_2/N_2$):27
Separation factor ($He/N_2$):22
Separation factor ($O_2/N_2$):3.2
Separation factor ($CH_4/N_2$):1.3

Example 3

The procedures of Example 1 were repeated, except that the substrate was placed in the sample position 'C' instead of 'A' and that 1-hexene was used instead of cyclohexene as organic monomer of the second polymer film. Thus, two polymer films were formed on the substrate to prepare a gas separating member according to the present invention. The performance of this gas separating member was as follows:

Rate of hydrogen permeation: $0.9 \times 10^{-2}$ cm$^3$/sec.·cm$^2$·bar
Rate of helium permeation: $0.75 \times 10^{-2}$ cm$^3$/sec.·cm$^2$·bar
Rate of oxygen permeation: $1.2 \times 10^{-3}$ cm$^3$/sec.·cm$^2$·bar
Rate of nitrogen permeation: $2.9 \times 10^{-4}$ cm$^3$/sec.·cm$^2$·bar

Rate of methane permeation: $3.5 \times 10^{-4}$ cm³/sec.·cm²·bar
Separation factor $(H_2/N_2)$:31
Separation factor $(He/N_2)$:26
Separation factor $(O_2/N_2)$:4.2
Separation factor $(CH_4/N_2)$:1.2

Example 4

A PC—3 substrate was placed in the sample position 'D', and hexamethyldisiloxane was used as organic monomer. They were reacted for 30 minutes at a monomer pressure of 0.27 mbar and a power input of 50 watts across the electrodes, so that the first polymer film was formed on the substrate. Next, for the second polymer film, toluene was used as organic monomer and the reaction was continued for five minutes at a monomer pressure of 0.27 mbar and a power input of 50 watts across the electrodes. Thus, the second polymer film was formed on the surface of the first polymer film to prepare a gas separating member according to this invention.

The performance of this gas separating member was as follows:

Rate of hydrogen permeation: $0.75 \times 10^{-2}$ cm³/sec.·cm²·bar
Rate of helium permeation: $6.8 \times 10^{-3}$ cm³/sec.·cm²·bar
Rate of oxygen permeation: $0.8 \times 10^{-3}$ cm³/sec.·cm²·bar
Rate of nitrogen permeation: $2.9 \times 10^{-4}$ cm³/sec.·cm²·bar
Rate of methane permeation: $4.3 \times 10^{-4}$ cm³/sec.·cm²·bar
Separation factor $(H_2/N_2)$:26
Separation factor $(He/N_2)$:23
Separation factor $(O_2/N_2)$:2.7
Separation factor $(CH_4/N_2)$:1.5

Example 5

The procedures of Example 4 were repeated, except that the substrate was placed in the sample position 'C' instead of 'D' and that styrene was used instead of toluene as organic monomer of the second polymer film. Thus, two polymer films were formed on the substrate to prepare a gas separating member according to this invention. The performance of this gas separating member was as follows:

Rate of hydrogen permeation: $2.5 \times 10^{-3}$ cm³/sec.·cm²·bar
Rate of helium permeation: $2.3 \times 10^{-3}$ cm³/sec.·cm²·bar
Rate of oxygen permeation: $2.4 \times 10^{-4}$ cm³/sec.·cm²·bar
Rate of nitrogen permeation: $1.1 \times 10^{-4}$ cm³/sec.·cm²·bar
Rate of methane permeation: $1.7 \times 10^{-4}$ cm³/sec.·cm²·bar
Separation factor $(H_2/N_2)$:22
Separation factor $(He/N_2)$:20
Separation factor $(O_2/N_2)$:2.1
Separation factor $(CH_4/N_2)$:1.4

Example 6

The procedures of Example 5 were repeated, except that the substrate was placed in the sample position 'D' instead of 'C'. Thus, two polymer films were formed on the substrate to prepare a gas separating member according to this invention. The performance of this gas separating member was as follows:

Rate of hydrogen permeation: $3.1 \times 10^{-3}$ cm³/sec.·cm²·bar
Rate of helium permeation: $3.0 \times 10^{-3}$ cm³/sec.·cm²·bar
Rate of oxygen permeation: $2.7 \times 10^{-4}$ cm³/sec.·cm²·bar
Rate of nitrogen permeation: $7.1 \times 10^{-5}$ cm³/sec.·cm²·bar
Rate of methane permeation: $1.3 \times 10^{-4}$ cm³/sec.·cm²·bar
Separation factor $(H_2/N_2)$:43
Separation factor $(He/N_2)$:43
Separation factor $(O_2/N_2)$:3.9
Separation factor $(CH_4/N_2)$:1.8

Example 7

The procedures of Example 5 were repeated to form the first polymer film on the substrate. Then, divinylbenzene was used as organic monomer of the second polymer film and the reaction was continued for one minute at a monomer pressure of 0.27 mbar and a power input of 50 watts across the electrodes. Thus, two polymer films were formed on the substrate to prepare a gas separating member according to this invention. The performance of this gas separating member was as follows:

Rate of hydrogen permeation: $1.1 \times 10^{-2}$ cm$^3$/sec.·cm$^2$·bar
Rate of helium permeation: $1.0 \times 10^{-2}$ cm$^3$/sec.·cm$^2$·bar
Rate of oxygen permeation: $1.1 \times 10^{-3}$ cm$^3$/sec.·cm$^2$·bar
Rate of nitrogen permeation: $3.2 \times 10^{-4}$ cm$^3$/sec.·cm$^2$·bar
Rate of methane permeation: $4.1 \times 10^{-4}$ cm$^3$/sec.·cm$^2$·bar
Separation factor ($H_2/N_2$):35
Separation factor ($He/N_2$):32
Separation factor ($O_2/N_2$):3.3
Separation factor ($CH_4/N_2$):1.3

### Example 8

The procedures of Example 6 were repeated to form the first polymer film on the substrate. Next, 1,3-pentadiene was used as organic monomer of the second polymer film and the reaction was continued for 10 minutes at a monomer pressure of 0.27 mbar and a power input of 50 watts across the electrodes. Thus, the second polymer film was formed on the surface of the first polymer film to prepare a gas separating member according to this invention. The performance of this gas separating member was as follows:

Rate of hydrogen permeation: $1.3 \times 10^{-2}$ cm$^3$/sec.·cm$^2$·bar
Rate of helium permeation: $1.1 \times 10^{-2}$ cm$^3$/sec.·cm$^2$·bar
Rate of oxygen permeation: $1.9 \times 10^{-3}$ cm$^3$/sec.·cm$^2$·bar
Rate of nitrogen permeation: $4.5 \times 10^{-4}$ cm$^3$/sec.·cm$^2$·bar
Rate of methane permeation: $6.4 \times 10^{-4}$ cm$^3$/sec.·cm$^1$·bar
Separation factor ($H_2/N_2$):28
Separation factor ($He/N_2$):23
Separation factor ($O_2/N_2$):4.2
Separation factor ($CH_4/N_2$):1.4

### Example 9

The procedures of Example 7 were repeated, except that dicyclopentadiene was used instead of divinylbenzene as organic monomer of the second polymer film. Thus, two polymer films were formed on the substrate to prepare a gas separating member according to this invention. The performance of this gas separating member was as follows:

Rate of hydrogen permeation: $0.9 \times 10^{-2}$ cm$^3$/sec.·cm$^2$·bar
Rate of helium permeation: $0.8 \times 10^{-2}$ cm$^3$/sec.·cm$^2$·bar
Rate of oxygen permeation: $0.8 \times 10^{-3}$ cm$^3$/sec.·cm$^2$·bar
Rate of nitrogen permeation: $3.6 \times 10^{-4}$ cm$^3$/sec.·cm$^2$·bar
Rate of methane permeation: $4.4 \times 10^{-4}$ cm$^3$/sec.·cm$^2$·bar
Separation factor ($H_2/N_2$):26
Separation factor ($He/N_2$):24
Separation factor ($O_2/N_2$):2.4
Separation factor ($CH_4/N_2$):1.3

### Example 10

The procedures of Example 5 were repeated, except that the substrate was placed in the sample position 'A' instead of 'C', so that the first polymer film was formed on the substrate. Next, furan was used as organic monomer of the second polymer film and the reaction was continued for 20 minutes at a monomer pressure of 0.27 mbar and a power input of 50 watts across the electrodes. Thus, the second polymer film was formed on the surface of the first polymer film to prepare a gas separating member according to this invention. The performance of this gas separating member was as follows:

Rate of hydrogen permeation: $0.8 \times 10^{-2}$ cm$^3$/sec.·cm$^2$·bar
Rate of helium permeation: $7.1 \times 10^{-3}$ cm$^3$/sec.·cm$^2$·bar
Rate of oxygen permeation: $7.4 \times 10^{-4}$ cm$^3$/sec.·cm$^2$·bar
Rate of nitrogen permeation: $1.9 \times 10^{-4}$ cm$^3$/sec.·cm$^2$·bar
Rate of methane permeation: $1.7 \times 10^{-4}$ cm$^3$/sec.·cm$^2$·bar
Separation factor ($H_2/N_2$):44
Separation factor ($He/N_2$):39
Separation factor ($O_2/N_2$):3.9
Separation factor ($CH_4/N_2$):0.9

### Example 11

The procedures of Example 10 were repeated, except that acrylic acid was used instead of furan as organic monomer of the second polymer film. Thus, two polymer films were formed on the substrate to prepare a gas separating member according to this invention. The performance of this gas separating member was as follows:

Rate of hydrogen permeation: $2.0 \times 10^{-2}$ cm³/sec.·cm²·bar
Rate of helium permeation: $1.3 \times 10^{-2}$ cm³/sec.·cm²·bar
Rate of oxygen permeation: $2.7 \times 10^{-3}$ cm³/sec.·cm²·bar
Rate of nitrogen permeation: $0.9 \times 10^{-3}$ cm³/sec.·cm²·bar
Rate of methane permeation: $1.3 \times 10^{-3}$ cm³/sec.·cm²·bar
Separation factor ($H_2/N_2$):22
Separation factor ($He/N_2$):14
Separation factor ($O_2/N_2$):3.0
Separation factor ($CH_4/N_2$):1.4

Example 12
The procedures of Example 9 were repeated, except that the substrate was placed in the sample position 'D' instead of 'C', and that benzonitrile was used as organic monomer of the second polymer film. Thus, two polymer films were formed on the substrate to prepare a gas separating member according to this invention. The performance of this gas separating member was as follows:

Rate of hydrogen permeation: $4.4 \times 10^{-3}$ cm³/sec.·cm²·bar
Rate of helium permeation: $5.2 \times 10^{-3}$ cm³/sec.·cm²·bar
Rate of oxygen permeation: $2.7 \times 10^{-4}$ cm³/sec.·cm²·bar
Rate of nitrogen permeation: $1.1 \times 10^{-4}$ cm³/sec.·cm²·bar
Rate of methane permeation: $1.4 \times 10^{-4}$ cm³/sec.·cm²·bar
Separation factor ($H_2/N_2$):38
Separation factor ($He/N_2$):45
Separation factor ($O_2/N_2$):2.3
Separation factor ($CH_4/N_2$):1.3

Example 13
The procedures of Example 6 were repeated, except that the substrate was placed in the sample position 'A' instead of 'D' and that acetylenecarboxylic acid was used as organic monomer of the second polymer film, whereby two polymer films were formed on the substrate to prepare a gas separating member according to this invention. The performance of this gas separating member was as follows:

Rate of hydrogen permeation: $5.5 \times 10^{-3}$ cm³/sec.·cm²·bar
Rate of helium permeation: $5.6 \times 10^{-3}$ cm³/sec.·cm²·bar
Rate of oxygen permeation: $4.7 \times 10^{-4}$ cm³/sec.·cm²·bar
Rate of nitrogen permeation: $3.2 \times 10^{-4}$ cm³/sec.·cm²·bar
Rate of methane permeation: $3.6 \times 10^{-4}$ cm³/sec.·cm²·bar
Separation factor ($H_2/N_2$):17
Separation factor ($He/N_2$):18
Separation factor ($O_2/N_2$):1.5
Separation factor ($CH_4/N_2$):1.1

Example 14
The procedures of Example 13 were repeated, except that the substrate was placed in the sample position 'C' instead of 'A' and that acetylene dicarboxylic acid dimethylester was used instead of acetylenecarboxylic acid as organic monomer of the second polymer film. Thus, two polymer films were formed on the substrate to prepare a gas separating member according to this invention. The performance of this gas separating member was as follows:

Rate of hydrogen permeation: $1.2 \times 10^{-2}$ cm³/sec.·cm²·bar
Rate of helium permeation: $1.2 \times 10^{-2}$ cm³/sec.·cm²·bar
Rate of oxygen permeation: $1.1 \times 10^{-3}$ cm³/sec.·cm²·bar
Rate of nitrogen permeation: $5.3 \times 10^{-4}$ cm³/sec.·cm²·bar
Rate of methane permeation: $6.0 \times 10^{-4}$ cm³/sec.·cm²·bar
Separation factor ($H_2/N_2$):22
Separation factor ($He/N_2$):22
Separation factor ($O_2/N_2$):2.0
Separation factor ($CH_4/N_2$):1.1

## 0 021 422

Claims

1. A gas separating member comprising a porous supporting substrate in the form of a film, wall or hollow fiber, a first polymer layer formed by plasma polymerization on said substrate, and a second polymer layer of hydrocarbon resin formed by plasma polymerization on said first layer, characterized in that the first polymer layer is of an organosilane resin having a thickness ranging from 0.1 to 0.3 $\mu$m.

2. The gas separating member according to claim 1, wherein the substrate has pores having a diameter of several thousandths of a micrometer to several micrometers.

3. The gas separating member according to claim 2, wherein the substrate has circular pores having a diameter of not more than several tenths of a micrometer.

4. The gas separating member according to claim 2, wherein the substrate has rectangular or oval pores having a minor side or axis of not more than one tenth of a micrometer.

5. The gas separating member according to claim 1, wherein the substrate is a sintered product of metal, ceramic or polymer particles.

6. The gas separating member according to claim 1, wherein the substrate is a fibrous product formed by knitting, weaving or stacking fibers in felt forms.

7. The gas separating member according to claim 1, wherein the substrate is a porous polymer film.

8. The gas separating member according to claim 7, wherein the porous polymer film is a member selected from the group consisting of a porous cellulose acetate film, a porous polycarbonate film and a porous polypropylene film.

9. The gas separating member according to claim 1, wherein the substrate is a porous polymer hollow fiber which has a diameter of several tenths of a micrometer to several millimeters.

10. The gas separating member according to claim 9, wherein the porous polymer hollow fiber is a member selected from the group consisting of a porous polypropylene hollow fiber and a porous cellulose acetate hollow fiber.

11. The gas separating member according to claim 1, wherein the substrate is a porous glass hollow fiber.

12. The gas separating member according to one of claims 1 to 11, wherein the organosilane is a member selected from the group consisting of hexamethyldisiloxane, diethoxydimethylsilane, octamethylcyclotetrasiloxane, tetraethoxysilane, triethoxyvinylsilane and tetramethylsilane.

13. The gas separating member according to one of claims 1 to 12, wherein the hydrocarbon is a member selected from the group consisting of 1-hexene, cyclohexene, toluene, styrene, divinylbenzene, 1-3-pentadiene, dicyclopentadiene, furan, acrylic acid, benzonitrile, acetylenecarboxylic acid and acetylene dicarboxylic acid dimethylester.

Patentansprüche

1. Gastrennungselement mit einem porösen, als Träger dienenden Substrat in Form eines Films, einer Wand oder einer hohlen Faser, einer ersten, durch Plasmapolymerisation auf dem Substrat gebildeten Polymerschicht und einer durch Plasmapolymerisation auf der ersten Schicht gebildeten zweiten Polymerschicht aus Kohlenwasserstoffharz, dadurch gekennzeichnet, daß die erste Polymerschicht aus einem Organosilanharz einer Dicke im Bereich von 0,1 bis 0,3 $\mu$m gebildet ist.

2. Gastrennungselement nach Anspruch 1, dadurch gekennzeichnet, daß das Substrat Poren mit einem Durchmesser von mehreren Tausendstel eines Mikrometers bis mehreren Mikrometern aufweist.

3. Gastrennungselement nach Anspruch 2, dadurch gekennzeichnet, daß das Substrat runde Poren mit einem Durchmesser von nicht mehr als mehreren Zehntel eines Mikrometers aufweist.

4. Gastrennungselement nach Anspruch 2, dadurch gekennzeichnet, daß das Substrat rechteckige oder ovale Poren aufweist, wobei die kleinere Seite bzw. die kleinere Achse nicht mehr als ein Zehntel eines Mikrometers beträgt.

5. Gastrennungselement nach Anspruch 1, dadurch gekennzeichnet, daß das Substrat ein gesintertes Erzeugnis aus Metall, Keramik oder Polymer-Teilchen ist.

6. Gastrennungselement nach Anspruch 1, dadurch gekennzeichnet, daß das Substrat ein Fasererzeugnis ist, das durch Stricken, Weben oder Stapeln von Fasern in Filzform gebildet ist.

7. Gastrennungselement nach Anspruch 1, dadurch gekennzeichnet, daß das Substrat ein poröser Polymerfilm ist.

8. Gastrennungselement nach Anspruch 7, dadurch gekennzeichnet, daß der poröse Polymerfilm aus der Gruppe poröser Celluloseacetatfilm, poröser Polycarbonatfilm und poröser Polypropylenfilm ausgewählt ist.

9. Gastrennungselement nach Anspruch 1, dadurch gekennzeichnet, daß das Substrat eine poröse Polymerhohlfaser ist, die einen Durchmesser von mehreren Zehntel eines Mikrometers bis mehrere Millimeter aufweist.

10. Gastrennungselement nach Anspruch 9, dadurch gekennzeichnet, daß die poröse Polymerhohlfaser ausgewählt ist aus der Gruppe poröse Propylenhohlfaser und poröse Celluloseacetathohlfaser.

11. Gastrennungselement nach Anspruch 1, dadurch gekennzeichnet, daß das Substrat eine poröse Glashohlfaser ist.

12. Gastrennungselement nach einem der Ansprüche 1 bis 11, dadurch gekennzeichnet, daß das Organosilan ausgewählt ist aus der Gruppe Hexamethyldisiloxan, Diethoxydimethylsilan, Octamethylcyclotetrasiloxan, Tetraethoxysilan, Triethoxyvinylsilan und Tetramethylsilan.

13. Gastrennungselement nach einem der Ansprüche 1 bis 12, dadurch gekennzeichnet, daß der Kohlenwasserstoff ausgewählt ist aus der Gruppe 1-Hexen, Cyclohexen, Toluol, Styrol, Divinylbenzol, 1-3-Pentadien, Dicyclopentadien, Furan, Acrylsäure, Benzonitril, Acetylencarboxylsäure und Acetylendicarboxylsäuredimethylester.

**Revendications**

1. Organe de séparation de gaz comprenant un substrat poreux formant support, sous la forme d'une pellicule, d'une paroi, ou d'une fibre creuse, une première couche de polymère formée par polymérisation par plasma sur ledit substrat, et une seconde couche de polymère en résine hydrocarbonée formée par polymérisation par plasma sur ladite première couche, caractérisé en ce que la première couche de polymère est en une résine d'organosilane ayant une épaisseur allant de 0,1 à 0,3 micron.

2. Organe de séparation de gaz suivant la revendication 1, dans lequel le substrat a des pores ayant un diamètre de plusieurs millièmes de micron à plusieurs microns.

3. Organe de séparation de gaz suivant la revendication 2, dans lequel le substrat a des pores circulaires ayant un diamètre ne dépassant pas plusieurs dixièmes de micron.

4. Organe de séparation de gaz suivant la revendication 2, dans lequel le substrat a des pores rectangulaires ou ovales ayant un petit côté ou un petit axe de pas plus d'un dixième de micron.

5. Organe de séparation de gaz suivant la revendication 1, dans lequel le substrat est un produit fritté de particules métalliques, de particules céramiques ou de particules polymères.

6. Organe de séparation de gaz suivant la revendication 1, dans lequel le substrat est un produit fibreux formé par tricotage, par tissage ou par empilage de fibres sous forme de feutre.

7. Organe de séparation de gaz suivant la revendication 1, dans lequel le substrat est une pellicule de polymère poreux.

8. Organe de séparation de gaz suivant la revendication 7, dans lequel la pellicule de polymère poreux est une pellicule d'acétate de cellulose poreux, une pellicule de polycarbonate poreux, ou une pellicule de polypropylène poreux.

9. Organe de séparation de gaz suivant la revendication 1, dans lequel le substrat est une fibre creuse de polymère poreux, qui a un diamètre allant de plusieurs dixièmes de micron à plusieurs millimètres.

10. Organe de séparation de gaz suivant la revendication 9, dans lequel la fibre creuse en polymère poreux est une fibre creuse en polypropylène poreux, ou une fibre creuse en acétate de cellulose poreux.

11. Organe de séparation de gaz suivant la revendication 1, caractérisé en ce que le substrat est une fibre creuse en verre poreux.

12. Organe de séparation de gaz suivant l'une des revendications 1 à 11, dans lequel l'organosilane est l'hexaméthyldisiloxane, le diéthoxydiméthylsilane, l'octaméthylcyclotétrasiloxane, le tétra-éthoxysilane, le triéthoxyvinylsilane, ou le tétraméthylsilane.

13. Organe de séparation de gaz suivant l'une des revendications 1 à 12, caractérisé en ce que l'hydrocarbure est le 1-hexène, le cyclohexène, le toluène, le styrène, le divinylbenzène, le 1-3-pentadiène, le dicyclopentadiène, le furanne, l'acide acrylique, le benzonitrile, l'acide acétylène-carboxylique ou l'ester diméthylique de l'acide acétylène dicarboxylique.

**0 0 21 422**

# F I G . 1

# F I G . 2